(19) Europäisches Patentamt
European Patent Office
Office européen des brevets

(11) **EP 4 032 924 A1**

(12) **EUROPEAN PATENT APPLICATION**

(43) Date of publication:
**27.07.2022 Bulletin 2022/30**

(21) Application number: **21153253.6**

(22) Date of filing: **25.01.2021**

(51) International Patent Classification (IPC):
**C08G 18/10** (2006.01)    **C08G 18/20** (2006.01)
**C08G 18/24** (2006.01)    **C08G 18/32** (2006.01)
**C08G 18/48** (2006.01)    **C08G 18/66** (2006.01)
**C08G 18/76** (2006.01)    **C08J 9/14** (2006.01)
**C08K 5/54** (2006.01)

(52) Cooperative Patent Classification (CPC):
(C-Sets available)
**C08G 18/7664; C08G 18/10; C08G 18/2027;
C08G 18/2081; C08G 18/242; C08G 18/3206;
C08G 18/4825; C08G 18/4829; C08G 18/667;
C08J 9/141; C08J 9/144; C08K 5/54;**
C08G 2110/0008; C08G 2110/0016;
C08G 2110/0058;                            (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventor: **The designation of the inventor has not
yet been filed**

(74) Representative: **Levpat
c/o Covestro AG
Gebäude 4825
51365 Leverkusen (DE)**

(54) **POLYURETHANE FOAM AND METHOD FOR PRODUCING THE SAME**

(57)    [Problem to be solved]
To provide a polyurethane foam having improved adhesive strength with an adherend.
[Solution]
A flexible or semirigid polyurethane foam for direct adhesion to an adherend, in which the polyurethane foam is obtained from a composition comprising a polyisocyanate, a polyol and a physical blowing agent, and in which the composition comprises a crosslinking agent having a functional group number of not less than 2 and a molecular weight of 60 to 1000 g/mol in an amount of not less than 3 parts by mass based on 100 parts by mass of the polyol.

EP 4 032 924 A1

**(Cont. next page)**

(52) Cooperative Patent Classification (CPC): (Cont.)
C08G 2350/00; C08G 2380/00; C08J 2201/026;
C08J 2203/162; C08J 2205/08; C08J 2205/10;
C08J 2303/14; C08J 2375/04

C-Sets
**C08G 18/10, C08G 18/667**

**Description**

Technical Field

The present invention relates to a polyurethane foam and a method for producing a polyurethane foam, and particularly relates to a polyurethane foam having improved adhesive strength with an adherend.

Background Art

Sound absorbing materials, sound insulating materials, damping materials and the like are known as sound suppressors that suppress generation of sound, and polyurethane materials and the like are used.

JP 2018-70148 A (Patent Literature 1) describes a resonance noise reducing tire comprising an adhesive layer applied to an inside of an inner liner and a sound absorbing material layer attached to the adhesive layer, in which the adhesive layer comprises a polyether containing an alkoxysilane substituent in a main chain not in a terminal, and a polyurethane foam is used for the sound absorbing material layer. Patent Literature 1 describes that it is possible to provide a stable resonance noise reducing tire without detachment of the sound absorbing material even for heat generation and deformation during running by applying an adhesive layer having improved elasticity and adhesive strength between the inner liner of the tire and the sound absorbing material layer.

JP 2012-117039 A (Patent Literature 2) describes a polyurethane foam obtained by reacting a diol with a diisocyanate, in which a polyether-based diol and a polyester-based diol are mixed and used as the diol. Patent Literature 2 describes that it is an object of the invention to improve a disadvantage that an internal space of a pneumatic tire is easily collapsed due to low tensile force and rigidity, and describes that it is possible to provide a pneumatic tire with reduced resonance noise of the internal space and comfortable ride feeling by applying the above polyurethane foam as a sound absorbing material.

JP 2020-19390 A (Patent Literature 3) describes a pneumatic tire with a sound suppressor comprising a pneumatic tire and a sound suppressor made of a porous resin foam arranged on an inner surface of a tread of the pneumatic tire, in which the sound suppressor comprises one annular body that extends continuously in the tire circumferential direction, and core density of the sound suppressor, overall density, and maximum height from the inner surface of the tread are specified in specific ranges, and a polyurethane foam is used as the porous resin foam. Patent Literature 3 describes that it is possible to provide a pneumatic tire with a sound suppressor that can suppress damage to the sound suppressor and improve sound suppression performance by applying such a sound suppressor to a pneumatic tire.

Citation List

Patent Literatures

Patent Literature 1: JP 2018-70148 A
Patent Literature 2: JP 2012-117039 A
Patent Literature 3: JP 2020-19390 A

Summary of Invention

Technical Problem to Be Solved

As applied to pneumatic tires in Patent Literatures 1 to 3, the sound suppressor is also often arranged in an environment where it is easily peeled off due to vibration or the like, and there is a problem with durability, thus it is required to improve the adhesive strength with the adherend. As described in Patent Literature 1, a method of using an adhesive for improving the adhesive strength is known, but it cannot be said that sufficient studies have been made on improving adhesiveness of the sound suppressor itself.

Therefore, an object of the present invention is to provide a polyurethane foam having improved adhesive strength with an adherend.

Solution to Problem

The present inventors have intensively studied in order to solve the above problem, and found that, in the production of a flexible or semirigid polyurethane foam, the adhesive strength of the obtained polyurethane foam with an adherend can be improved by using a physical blowing agent as a blowing agent, and sufficient adhesive strength can be exhibited even if it is applied directly to the adherend.

Therefore, a first aspect of the present invention is a flexible or semirigid polyurethane foam for direct adhesion to an adherend, in which the polyurethane foam is obtained from a composition comprising a polyisocyanate, a polyol and a physical blowing agent, and in which the composition comprises a crosslinking agent having a functional group number of not less than 2 and a molecular weight of 60 to 1000 g/mol in an amount of not less than 3 parts by mass based on 100 parts by mass of the polyol.

In a preferred embodiment of the polyurethane foam of the present invention, the physical blowing agent is at least one selected from the group consisting of hydrochlorofluorocarbons, hydrofluorocarbons, hydrofluoroolefins, heptane, hexane, pentane, and cyclopentane.

In another preferred embodiment of the polyurethane foam of the present invention, the adherend is a pneumatic tire.

In addition, a second aspect of the present invention is a method for producing a polyurethane foam, in which the method comprises a step of directly applying a composition comprising a polyisocyanate, a polyol and a physical blowing agent to an adherend to form a flexible or semirigid polyurethane foam.

Advantageous Effects of Invention

According to the first and second aspects of the present invention, it is possible to provide a polyurethane foam having improved adhesive strength with an adherend.

Description of Embodiments

The present invention will be described in detail below.

One aspect of the present invention is a polyurethane foam. Foam and non-foam are known as polyurethane products, but one embodiment of the present invention relates to a polyurethane foam, from the viewpoint of a sound suppressor for reducing a problematic sound in a place where it is used. Further, the polyurethane foam is classified into a flexible foam, a semirigid foam and a rigid foam, and the polyurethane foam of the present invention is preferably a flexible or semirigid polyurethane foam.

As used herein, the "flexible polyurethane foam" refers to a urethane foam with a product density of less than 100 kg/m$^3$, which is molded using a compounded polyol containing not less than 50% by mass of a polyol having a hydroxyl value of not more than 56 mg KOH/g.

The "semirigid polyurethane foam" refers to a urethane foam with a product density of not less than 100 kg/m$^3$, which is molded using a compounded polyol containing not less than 50% by mass of a polyol having a hydroxyl value of not more than 56 mg KOH/g and not less than 5% by mass of a crosslinking agent having a hydroxyl value of not less than 112 mg KOH/g.

The "rigid polyurethane foam" refers to a urethane foam, which is molded using a compounded polyol containing not less than 50% by mass of a polyol having a hydroxyl value of 300 to 500 mg KOH/g.

Definition of the hydroxyl value will be described later. The density here is an apparent overall density, and can be measured according to JIS K 7222: 2005 as described later.

The polyurethane foam of the present invention is obtained from a composition comprising a polyisocyanate, a polyol and a physical blowing agent. According to the present invention, in the production of a flexible or semirigid polyurethane foam, the adhesive strength of the obtained polyurethane foam with an adherend can be improved by using a physical blowing agent as a blowing agent. When a physical blowing agent is used in the production of polyurethane foam, heat is taken away by the adherend and foaming is less likely to occur in the vicinity of an adhesion interface with the adherend, so that a dense skin is generated and adhesion area of the polyurethane foam to the adherend can be increased. Thus, the adhesive strength of the polyurethane foam to the adherend can be improved. On the other hand, when a chemical blowing agent is used, the adhesion area of the polyurethane foam to the adherend is small because air bubbles are present even in the vicinity of the adhesion interface with the adherend. Therefore, the use of the chemical blowing agent does not provide an effect of improving the adhesive strength as exhibited by the use of the physical blowing agent. Further, in a foaming reaction using water or the like as a chemical blowing agent, a urea bond is formed by a reaction with polyisocyanate. Therefore, when water or the like is used, there is also a problem that it is easily peeled off due to cohesive failure of urea which is a hard segment.

According to the polyurethane foam of the present invention, since it is possible to provide a polyurethane foam having improved adhesive strength with an adherend, sufficient adhesive strength can be exhibited even if the polyurethane foam is directly applied to the adherend. Therefore, the polyurethane foam of the present invention is preferred as a polyurethane foam for direct adhesion to an adherend. In the present specification, the phrase "direct adhesion to an adherend" means that a polyurethane foam is directly adhered to an adherend, and in a more specific embodiment, the polyurethane raw material is foamed by directly applying or injecting the polyurethane raw material to an adherend, whereby a polyurethane foam is directly adhered to an adherend. On the other hand, adhesion using means such as an adhesive or a jig for adhering a polyurethane foam and an adherend is excluded from the "direct adhesion to an adherend".

The polyurethane foam of the present invention has a peel strength from an adherend of preferably not less than 55 N, and further preferably not less than 70 N. On the other hand, although the upper limit is not particularly limited, for example, the peel strength from an adherend is not more than 500 N, and preferably not more than 200 N. The peel strength of the polyurethane foam to an adherend can be improved by appropriately adjusting the type and amount of blowing agent (specifically, by using a physical blowing agent and increasing the amount of physical blowing agent when used in combination with a chemical blowing agent).

In the present specification, the peel strength of the polyurethane foam to an adherend is a value measured by the following procedures.

1. A reaction mixture solution (raw material composition described later) is applied to a flat rubber sheet and foamed to form a foam with a width of not less than 10 mm.
2. A notch is made in the cured polyurethane foam with a width of 10 mm perpendicular to the rubber sheet.
3. Using a push-pull gauge (for example, 9520A manufactured by Aikoh Engineering Co., Ltd.) equipped with a chevron indenter with a width of 10 mm, an adhesion interface is pressed by the chevron indenter at an angle of 45 degrees to the rubber sheet to peel off the urethane foam from the rubber sheet.
4. The maximum load displayed on the push-pull gauge is recorded.
5. The average value of $N \geq 5$ is defined as the peel strength.

The polyurethane foam of the present invention uses a remaining portion (core portion) cut from a surface layer portion of the polyurethane foam to a thickness of not less than 2 mm, and has a thickness of 20 mm and an average value of normal incidence sound absorption coefficient at 100 to 5000 Hz of preferably not less than 0.4, and further preferably not less than 0.5. On the other hand, although there is no particular limitation on the upper limit, for example, the average value of the normal incidence sound absorption coefficient at 100 to 5000 Hz is not more than 1.0.

In the present specification, the normal incidence sound absorption coefficient of the polyurethane foam is a value measured according to JIS A 1405-2: 2007. The incident direction of the sound to be measured was from the upper side in the foaming direction.

The polyurethane foam of the present invention preferably has an apparent overall density of 30 to 150 kg/m$^3$, further preferably 40 to 120 kg/m$^3$, and particularly preferably 50 to 90 kg/m$^3$. In this specification, the density of polyurethane foam is measured according to JIS K 7222: 2005.

The composition used for forming the polyurethane foam of the present invention is a composition comprising a polyisocyanate, a polyol and a physical blowing agent, as described above. In the present specification, the composition used for forming the polyurethane foam is also referred to as a raw material composition.

The polyisocyanate used in the raw material composition is a compound having a plurality of isocyanate groups. Examples thereof include aliphatic, alicyclic, aromatic or araliphatic polyisocyanates, and modified products of these polyisocyanates are also included. Examples of the modified product of polyisocyanate include polyisocyanates having a structure such as uretdione, isocyanurate, urethane, urea, allophanate, biuret, carbodiimide, iminooxadiazinedione, oxadiazinetrione, or oxazolidone. Further, as the polyisocyanate, an isocyanate group-containing prepolymer obtained by reacting a polyol with a polyisocyanate may be used. In addition, the polyisocyanates may be used alone or in combination of two or more.

Among the polyisocyanates, examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, polymethylene polyphenyl polyisocyanate, and the like. Examples of the alicyclic polyisocyanate include cyclohexylene diisocyanate, methylcyclohexylene diisocyanate, isophorone diisocyanate, dicyclohexylmethane diisocyanate, dimethyldicyclohexylmethane diisocyanate, and the like. Examples of the aliphatic polyisocyanate include methylene diisocyanate, ethylene diisocyanate, propylene diisocyanate, tetramethylene diisocyanate, hexamethylene diisocyanate, and the like.

The polyisocyanate preferably has an isocyanate group content of 20 to 40% by mass, and further preferably 23 to 35% by mass. In the present specification, the isocyanate group content is determined according to JIS K 1603-1: 2007.

In the raw material composition, the amount of polyisocyanate can be shown by, for example, an isocyanate index. In the raw material composition, the isocyanate index is preferably 70 to 150, more preferably 80 to 120, and further preferably 90 to 110.

In the present specification, the isocyanate index refers to a value obtained by multiplying 100 by the ratio of the isocyanate group of the polyisocyanate to the total active hydrogen that reacts with an isocyanate group such as polyol.

The polyol used in the raw material composition is a compound having a plurality of hydroxyl groups, and is preferably a polymeric polyol. Specific examples of the polyol include polyether polyols, polyester polyols, polycarbonate polyols, polylactone polyols, polybutadiene polyols, polymer polyols, Mannich polyols, and the like.

In the raw material composition, the amount of polyol is appropriately adjusted according to the amount of polyisocyanate, and is, for example, 30 to 70 parts by mass based on 100 parts by mass of the raw material composition. In addition, the polyols may be used alone or in combination of two or more.

Typical examples of the polyether polyol include polyoxyalkylene-based polyols, and the polyoxyalkylene-based polyols can be produced by subjecting an alkylene oxide to a ring-opening addition reaction, using a compound having two or more hydroxyl groups, primary amino groups, secondary amino groups, and other active hydrogen-containing groups and the like as starting materials.

The starting raw materials for the polyoxyalkylene-based polyols include polyhydric alcohols such as ethylene glycol, diethylene glycol, propylene glycol, dipropylene glycol, 1,4-butanediol, 1,6-hexanediol, neopentyl glycol, glycerin, trimethylolpropane, pentaerythritol, diglycerin, mannose, sucrose, fructose, dextrose and sorbitol, alkanolamines such as ethanolamine, diethanolamine, triethanolamine and methyldiethanolamine, polyvalent amines such as ethylenediamine, tolylenediamine, diethyltoluenediamine, 1,3-propanediamine, 1,6-hexanediamine, isophoronediamine, diethylenetriamine and triethylenepentaamine, polyhydric phenols such as bisphenol A, bisphenol F, resorcinol and hydroquinone, Mannich bases (phenols, aldehydes, alkanolamines or the like subjected to a condensation reaction), modified products thereof, and the like, and these starting raw materials may be used alone or in combination of two or more.

Examples of the alkylene oxide to be subjected to the ring-opening addition reaction in the production of the polyoxyalkylene-based polyol include ethylene oxide, propylene oxide, 1,2-butylene oxide, 2,3-butylene oxide, styrene oxide and the like, and these alkylene oxides may be used alone or in combination of two or more.

Examples of the polymer polyol include those in which polymer fine particles such as polyacrylonitrile fine particles and polystyrene fine particles are dispersed in a polyoxyalkylene-based polyol, and the like. Polymer polyol is a kind of polyether polyol because it contains a polyoxyalkylene-based polyol.

The Mannich polyol can be produced by subjecting phenols, aldehydes, alkanolamines and the like to a condensation reaction, and further, carrying out a ring-opening addition reaction of an alkylene oxide such as ethylene oxide or propylene oxide as necessary. Mannich polyol is a kind of polyether polyol because it has a plurality of ether bonds in a molecule.

Examples of preferred polyether polyols include polyoxyalkylene-based polyols such as (di)ethylene glycol-based polyether polyols, (di)propylene glycol-based polyether polyols, (di)glycerin-based polyether polyols, trimethylolpropane-based polyether polyols, pentaerythritol-based polyether polyols, sucrose-based polyether polyols, dextrose-based polyether polyols, sorbitol-based polyether polyols, mono(di,tri)ethanolamine-based polyether polyols, ethylenediamine-based polyether polyols, tolylenediamine-based polyether polyols, and bisphenol A-based polyether polyols, obtained by an addition reaction of ethylene oxide and/or propylene oxide, polymer polyols in which polymer fine particles are dispersed in polyoxyalkylene-based polyols, Mannich polyols, and the like.

The polyester polyol can be produced by adjusting production conditions of polyester, and examples thereof include polyester polyols having hydroxyl groups at least at both ends of the main chain, and more specifically, linear polyester polyols, slightly branched polyester polyols, and the like. The polyester polyols can be prepared by known methods using aliphatic, cycloaliphatic or aromatic dicarboxylic acids, a diol, and optionally polycarboxylic acids and/or a trifunctional or higher functional polyol.

Polylactone polyol is a homopolymer or copolymer of lactone, and examples thereof include polylactones having hydroxyl groups at least at both ends of the main chain. Specifically, it can be produced by subjecting a lactone such as ε-caprolactone, β-butyrolactone, γ-butyrolactone, γ-valerolactone or δ-valerolactone to a ring-opening addition reaction, using a compound having two or more active hydrogen-containing groups as described above for the polyoxyalkylene-based polyol as a starting material. Polylactone polyol is a kind of polyester polyol because it has a plurality of ester bonds in a molecule.

The polycarbonate polyol can be produced by adjusting production conditions of polycarbonate, and examples thereof include polycarbonates having hydroxyl groups at least at both ends of the main chain, and the like. In addition, examples of the polybutadiene polyol include polybutadiene having hydroxyl groups at least at both ends of the main chain, and the like.

The polyol has a hydroxyl value of preferably 28 to 112 mg KOH/g, and more preferably 28 to 56 mg KOH/g.

In the present specification, the hydroxyl value is the number of mg of potassium hydroxide required to neutralize free hydroxyl groups in 1 g of a sample after complete acetylation with carboxylic acid anhydride (for example, phthalic anhydride or acetic anhydride) (see JIS K 15572007).

The polyol has a molecular weight of preferably 1500 to 12000 g/mol, preferably 2000 to 8000 g/mol, and more preferably 2000 to 7000 g/mol.

In the present specification, when the polyol is a polymer, its molecular weight can be measured as a polystyrene equivalent number average molecular weight measured by gel permeation chromatography.

The polyol has a functional group number (fn) of preferably 2 to 8, more preferably 2 to 6, and further preferably 2 to 4.

In the present specification, the functional group number (fn) per molecule of polyol can be calculated by the following calculation formula from the hydroxyl value (OHV) and the number average molecular weight (Mn) of the polyol.

$$fn = Mn(g/mol) \times OHV(mg\ KOH/g)/56100$$

Specific examples of the physical blowing agent used in the raw material composition include fluorocarbons such as hydrochlorofluorocarbons (HCFCs) and hydrofluorocarbons (HFCs), hydrofluoroolefins (HFOs), hydrocarbons such as heptane, hexane, pentane and cyclopentane, carbon dioxide, and the like. Among them, hydrofluoroolefins and cyclopentane are preferable from the viewpoint of improving adhesive strength with the adherend. The blowing agents may be used alone or in combination of two or more.

The raw material composition preferably comprises cyclopentane as a physical blowing agent.

The raw material composition preferably comprises a hydrofluoroolefin as a physical blowing agent. Hydrofluoroolefins (HFOs) are blowing agents that are preferably used as physical blowing agents that do not fall into the category of fluorocarbons. HFOs are olefin compounds containing a fluorine atom, and also include compounds further containing a halogen atom (for example, a chlorine atom) other than fluorine. Among HFOs, those further containing a chlorine atom are also referred to as hydrochlorofluoroolefins (HCFOs). Although HFOs and HCFOs may be distinguished, in the present specification, HFOs include HCFOs as described above.

The hydrofluoroolefin preferably has 2 to 5 carbon atoms and preferably has 3 to 7 fluorine atoms. The molecular weight of the HFO is preferably 100 to 200 g/mol. Specific examples of the HFO include 1,2,3,3,3-pentafluoropropene, 1,3,3,3-tetrafluoropropene, 2,3,3,3-tetrafluoropropene, 1,2,3,3-tetrafluoropropene, 3,3,3-trifluoropropene, 1,1,1,4,4,4-hexafluorobutene, 1-chloro-3,3,3-trifluoropropene, 2-chloro-3,3,3-trifluoropropene, 3,3-dichloro-3-fluoropropene, 2-chloro-1,1,1,4,4,4-hexafluorobutene, 2-chloro-1,1,1,3,4,4,4-heptafluorobutene, and the like. The HFO may be an isomer of either a cis form or a trans form.

The amount of the physical blowing agent is preferably 0.5 to 15 parts by mass, and further preferably 3 to 12 parts by mass, based on 100 parts by mass of the raw material composition.

The raw material composition may comprise a chemical blowing agent together with a physical blowing agent. Examples of the chemical blowing agent include water, carboxylic acids such as formic acid and acetic acid, and the like. However, since the chemical blowing agent cannot be expected to have an effect of improving adhesive strength like the physical blowing agent, it is desirable that the amount of the chemical blowing agent is small even when the chemical blowing agent is used. For example, the amount of chemical blowing agent is less than 0.5 parts by mass based on 100 parts by mass of the raw material composition.

The raw material composition preferably comprises a crosslinking agent. As the crosslinking agent, a compound having a functional group number of not less than 2 and a molecular weight of 60 to 1000 g/mol is preferable. Here, the functional group of the crosslinking agent usually refers to a group that is reactive with isocyanate. The crosslinking agent has an average functional group number of preferably not less than 2, and more preferably 2 to 3. The crosslinking agent has a molecular weight of preferably 60 to 1000 g/mol, and more preferably 60 to 400 g/mol. Examples of the crosslinking agent include an amine crosslinking agent and a crosslinking agent having a hydroxyl group. Since the crosslinking agent also includes a compound having a plurality of hydroxyl groups, it may correspond to a polyol, but in the present specification, the crosslinking agent is a component that is distinguished from the polyol. Therefore, the polyol in the present specification is a compound having a plurality of hydroxyl groups, but it is also possible to express as a component from which the compound having a functional group number of not less than 2 and a molecular weight of 60 to 1000 g/mol is excluded.

The amount of the crosslinking agent is preferably not less than 3 parts by mass, and further preferably 5 to 25 parts by mass based on 100 parts by mass of the polyol. The crosslinking agents may be used alone or in combination of two or more.

Examples of the amine crosslinking agent include aliphatic amines, aromatic amines, and alicyclic amines having a primary or secondary amino group, and the like. Specific examples of an aliphatic amine compound having a primary or secondary amino group include alkylamine compounds such as ethylenediamine, m-xylenediamine, 1,4-diaminohexane, butylamine, hexamethylenediamine, diethylenetriamine, triethylenetetramine and dimethylaminopropylamine, alkanolamine compounds such as ethanolamine, N-methylethanolamine, diethanolamine, triethanolamine, isopropanolamine, and diisopropanolamine, hydroxylamine, and the like. Specific examples of an aromatic amine compound having a primary or secondary amino group include 3,5-diethyl-2,4 (or 2,6)-diaminotoluene (DETDA), 2-chloro-p-phenylenediamine, 3,5-dimethylthio-2,4 (or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, and the like. Specific examples of an alicyclic amine compound having a primary or secondary amino group include cycloalkanes having two or more amino groups and/or aminoalkyl groups such as 1,3-bis(aminomethyl)cyclohexane and isophoronediamine.

Specific examples of the crosslinking agent having a hydroxyl group include ethylene glycol, polyethylene glycol, 1,4-butanediol, neopentyl glycol, 1,6-hexanediol, diethylene glycol, triethylene glycol, dipropylene glycol, triethanolamine, glycerin, sorbitol, sucrose, pentaerythritol, N-alkyldiethanol, bisphenol A-alkylene oxide adducts, glycerin-alkylene oxide adducts, trimethylolpropane-alkylene oxide adducts, pentaerythritol-alkylene oxide adducts, sorbitol-alkylene oxide adducts, sucrose-alkylene oxide adducts, aliphatic amine-alkylene oxide adducts, alicyclic amine-alkylene oxide adducts, heterocyclic polyamine-alkylene oxide adducts, aromatic amine-alkylene oxide adducts, polyols derived from natural products, and the like.

The raw material composition may comprise a catalyst. Examples of the catalyst include catalysts (foaming catalysts) that promote a reaction between water and polyisocyanate, catalysts (resinification catalysts) that promote a reaction between polyol and polyisocyanate, catalysts (trimerization catalysts) that promote a trimerization reaction of polyisocyanate (that is, formation of an isocyanurate ring), and the like. In the present invention, the raw material composition preferably comprises a resinification catalyst.

Examples of the foaming catalyst include dimorpholine-2,2-diethyl ether, N,N,N',N",N"-pentamethyldiethylenetriamine, bis(dimethylaminoethyl)ether, 2-(2-dimethylaminoethoxy)ethanol, N,N,N'-trimethyl-N'-hydroxyethyl bisaminoethyl ether, and the like.

Examples of the resinification catalyst include amine catalysts such as triethylenediamine, N,N-dimethylcyclohexylamine, N,N,N',N'-tetramethylethylenediamine, N,N,N',N",N"',N"'-hexamethyltriethylenetetramine, N-dimethylaminoethyl-N'-methylpiperazine, N,N,N',N'-tetramethylhexamethylenediamine, 1,2-dimethylimidazole, 1-isobutyl-2-methylimidazole, N,N-dimethylaminopropylamine and bis(dimethylaminopropyl)amine, alkanolamine catalysts such as N,N-dimethylaminoethanol, N,N,N'-trimethylaminoethylethanolamine, N-(3-dimethylaminopropyl)-N,N-diisopropanolamine, N-(2-hydroxyethyl)-N'-methylpiperazine, N,N-dimethylaminohexanol and 5-dimethylamino-3-methyl-1-pentanol, metal catalysts such as stannous octylate, dibutylstannic dilaurate, lead octylate, bismuth carboxylate and zirconium complex, and the like. As these amine catalysts and alkanol amine catalysts, amine carbonates synthesized by adding carbonic acid and amine carboxylates synthesized by adding a carboxylic acid such as formic acid or acetic acid may be used.

Examples of the trimerization catalyst include aromatic compounds such as 2,4,6-tris(dialkylaminoalkyl)hexahydro-S-triazine, 1,3,5-tris(N,N-dimethylaminopropyl)hexahydro-S-triazine, 2,4,6-tris(dimethylaminomethyl)phenol and 2,4-bis(dimethylaminomethyl)phenol, alkali metal carboxylates such as potassium acetate, potassium 2-ethylhexanoate and potassium octylate, quaternary ammonium salts of carboxylic acid, or other onium salts, and the like.

The amount of the catalyst is, for example, 0.1 to 5 parts by mass, and preferably 0.5 to 2.5 parts by mass, based on 100 parts by mass of the raw material composition. The catalysts may be used alone or in combination of two or more.

The raw material composition may comprise a foam stabilizer. The foam stabilizer is preferably a surfactant. The surfactants include ionic surfactants such as anionic, cationic and amphoteric, and nonionic surfactants, but nonionic surfactants are preferred. Also, specific examples preferably include silicone-based surfactants and fluorine-based surfactants. The amount of the foam stabilizer is preferably 0.3 to 5 parts by mass based on 100 parts by mass of the polyol. The foam stabilizers may be used alone or in combination of two or more.

In the raw material composition, as other components, additives such as flame retardants, coloring agents, fillers, antioxidants, ultraviolet absorbers, heat stabilizers, light stabilizers, plasticizers, fungicides, antibacterial agents, solvents, viscosity-reducing agents, depressurizing agents and separation inhibitors may be appropriately compounded as necessary.

The raw material composition can be prepared by mixing various components appropriately selected as necessary. For example, the raw material composition can be prepared by mixing a polyol component comprising a polyol and a polyisocyanate component composed of a polyisocyanate. At this time, the physical blowing agent may be contained in the polyol component or the polyisocyanate component, or may be compounded when the polyol component and the polyisocyanate component are mixed.

The polyol component comprises a polyol, usually comprises a crosslinking agent, a blowing agent, a foam stabilizer and a catalyst, and may comprise additional additives. Also, the polyisocyanate component is composed of polyisocyanate, but may further comprise additives such as blowing agents and flame retardants.

The raw material composition is preferably adjusted so that liquid dripping length thereof exceeds 300 mm. When the liquid dripping length of the raw material composition exceeds 300 mm, wettability of the raw material composition to the adherend is improved, which is advantageous for improving the adhesive strength.

In the present specification, the liquid dripping length of the raw material composition is measured by the following measurement method. An acrylic plate is placed vertically at a position 10 cm away from a discharge position of a high-pressure foaming machine, and the raw material composition is discharged from the high-pressure foaming machine to the acrylic plate at a speed of 120 g/sec for 0.2 seconds to form a discharged product on the acrylic plate.

Five minutes after the discharge, a length from the highest point to the lowest point in the vertical direction of the discharged product on the acrylic plate is measured as the liquid dripping length.

The polyurethane foam of the present invention can be formed by foaming the above-mentioned raw material composition. Since the raw material composition contains a polyol and a polyisocyanate, it is possible to proceed the reaction by mixing both to form a polyurethane foam. The temperature at the time of forming the polyurethane foam is preferably 10 to 30°C.

The foaming method of the polyurethane foam is not particularly limited, and known foaming means, for example, hand mixing foaming, simple foaming, injection method, floss injection method, spray method, and the like can be used. Also, the molding method of the polyurethane foam is not particularly limited, and known molding means, for example, mold molding, slab molding, laminate molding, in-situ foam molding, and the like can be used.

The polyurethane foam of the present invention is preferred as a product that suppresses generation of sound, like a sound suppressor such as a sound absorbing material, a sound insulating material, or a damping material.

Examples of the adherend of the polyurethane foam of the present invention include pneumatic tires, vehicle bodies (automobiles and the like) or parts thereof (wheels, especially, rims and the like), heavy machinery, generators, OA equipment, home appliances, building materials, and the like. Examples of vehicle body parts include vehicle body skeleton members, such as pillars, sills (rocker panels), chassis rails, and the like. When the polyurethane foam of the present invention is applied to a pneumatic tire, it is preferable that the polyurethane foam of the present invention is arranged on an inner surface (a surface on the side of space that traps air) of the pneumatic tire, particularly on the inner surface of a tread part. Also, when the polyurethane foam of the present invention is applied to the space that traps air of the pneumatic tire, the polyurethane foam of the present invention may be arranged on the wheel side, preferably on the rim surface, not on the tire.

Another aspect of the present invention is a method for producing a polyurethane foam. The method for producing a polyurethane of the present invention comprises directly applying a composition comprising a polyisocyanate, a polyol and a physical blowing agent to an adherend to form a flexible or semirigid polyurethane foam. According to the present invention, in the production of a flexible or semirigid polyurethane foam, the adhesive strength of the obtained polyurethane foam with an adherend can be improved by using a physical blowing agent as a blowing agent. In the present specification, the method for producing a polyurethane foam of the present invention is also referred to as the production method of the present invention.

The contents described in the description of the polyurethane foam of the present invention, such as "composition comprising a polyisocyanate, a polyol and a physical blowing agent", "adherend", "polyurethane foam" and the like also apply to the production method of the present invention. For example, as the "composition comprising a polyisocyanate, a polyol and a physical blowing agent" in the production method of the present invention, the raw material composition described in the description of the polyurethane foam of the present invention is suitable. Further, examples of the "adherend" include pneumatic tires and the like, as described in the description of the polyurethane foam of the present invention.

The "directly applying" in the production method of the present invention means that the composition used for forming the polyurethane foam is directly applied to the adherend, and an embodiment in which an adhesive is applied on the adherend before applying the composition is excluded. On the other hand, it is possible to clean or wash the surface of the adherend before applying such composition. Examples thereof include degreasing treatment and the like.

In the production method of the present invention, as the method of applying the composition to the adherend, the foaming means described in the description of the polyurethane foam of the present invention can be used, but it is preferable to apply the composition to the adherend by the injection method.

Examples

Hereinafter, the present invention will be described in more detail with reference to Examples. However, the present invention is not limited to the following Examples.

<Raw materials>

Materials used for producing a polyurethane foam are shown below.

1) Polyol a1: polyether polyol having an average functional group number of 3, a viscosity at 25 °C of 1160 mPa·s and a hydroxyl value of 28 mg KOH/g, which is obtained by ring-opening addition polymerization of alkylene oxide
2) Polyol a2: polyether polyol having an average functional group number of 2, a viscosity at 25 °C of 850 mPa·s and a hydroxyl value of 28 mg KOH/g, which is obtained by ring-opening addition polymerization of alkylene oxide
3) Crosslinking agent b1: monoethylene glycol manufactured by Nippon Shokubai Co., Ltd., functional group number fn = 2, hydroxyl value = 1810 mg KOH/g, molecular weight = 62 g/mol

4) Crosslinking agent b2: PEG 200 manufactured by Sanyo Chemical Industries, Ltd., functional group number fn = 2, hydroxyl value = 561 mg KOH/g, molecular weight = 200 g/mol

5) Crosslinking agent b3: triethanolamine manufactured by Nippon Shokubai Co., Ltd., functional group number fn = 3, hydroxyl value = 1506 mg KOH/g, molecular weight = 149 g/mol

6) Crosslinking agent b4: diethanolamine manufactured by Nippon Shokubai Co., Ltd., functional group number fn = 2, hydroxyl value = 1603 mg KOH/g, molecular weight = 105 g/mol

7) Catalyst c1: dibutyltin dilaurate manufactured by Tokyo Fine Chemical CO.,LTD.

8) Catalyst c2: Dabco EG manufactured by Evonik

9) Catalyst c3: Toyocat ET manufactured by Tosoh Corporation

10) Catalyst c4: Dabco 2040 manufactured by Evonik

11) Catalyst c5: U-CAT SA102 manufactured by San-Apro Ltd.

12) Foam stabilizer d1: TEGOSTAB B 8715 LF 2 manufactured by Evonik

13) Foam stabilizer d2: TEGOSTAB B 8745 LF 2 manufactured by Evonik

14) Blowing agent e1: water

15) Blowing agent e2: Solstice (trademark) LBA (HCFO-1233zd) manufactured by Honeywell

16) Blowing agent e3: MARUKASOL FH (Cyclopentane) manufactured by Maruzen Petrochemical CO.,LTD.

17) Polyisocyanate f1: modified prepolymer SBU ISOCYANATE S234 manufactured by Sumika Covestro Urethane Co., Ltd, NCO% = 25% by mass

18) Polyisocyanate f2: mixed polyisocyanate, mixing ratio: Sumidur 44V20 manufactured by Sumika Covestro Urethane Co., Ltd./Sumidur 44S41 manufactured by Sumika Covestro Urethane Co., Ltd. = 4/6 (mass ratio), NCO% = 33% by mass

<Preparation example of raw material composition>

Polyol components were prepared according to formulation in Table 1. A physical blowing agent and a polyisocyanate component were mixed, and then a polyol component was mixed to prepare a raw material composition. Compounding amounts of the polyol component, the physical blowing agent and the polyisocyanate component are shown in Table 1.

<Preparation example of polyurethane foam>

The raw material composition prepared according to the above <Preparation example of raw material composition> was directly applied to an adherend by a high-pressure foaming machine to form a polyurethane foam.

As the high-pressure foaming machine, a high-pressure foaming machine manufactured by Cannon Corporation was used. Temperatures of the polyol component and the polyisocyanate component were adjusted to the raw material temperature shown in Table 1. Discharge was carried out at a discharge rate of the raw material composition of 120 to 200 g/sec. Discharge was carried out at a discharge pressure of the raw material composition of 13 to 16 MPa.

<Foam evaluation>

Foam evaluation was performed when forming the polyurethane foam according to the above <Preparation example of polyurethane foam>. The evaluation criteria were "○" when foaming occurred without collapse, and "×" when collapse occurred during foaming. The results are shown in Table 1.

For polyurethane in which collapse occurred during foaming, the density measurement, peeling test, measurement of sound absorption coefficient and measurement of liquid dripping length described later could not be performed, so these evaluations were not performed.

<Density>

Apparent overall density of polyurethane foam was measured according to JIS K 7222: 2005. A polyurethane foam with a width of 80 mm to 120 mm, a height of 10 mm to 30 mm, and a depth of not less than 30 mm was prepared and cut out to a depth of 20 mm to obtain a sample. The results are shown in Table 1.

<Peeling test>

Peel strength of the polyurethane foam was measured according to the following procedures. The results are shown in Table 1. In addition, the measured value was evaluated as "○" when it was not less than 55 N and as "×" when it was less than 55 N.

1. Polyurethane foam was directly prepared on a flat rubber sheet according to the above

<Preparation example of polyurethane foam>.

2. A notch was made in the polyurethane foam with a width of 10 mm perpendicular to the rubber sheet.
3. Using a push-pull gauge (9520A manufactured by Aikoh Engineering Co., Ltd.) equipped with a chevron indenter with a width of 10 mm, an adhesion interface was pressed by the chevron indenter at an angle of 45 degrees to the rubber sheet to peel off the polyurethane foam from the rubber sheet.
4. The maximum load displayed on the push-pull gauge was recorded.
5. The average value obtained by measuring 5 times was defined as the peel strength of the polyurethane foam.

<Sound absorption coefficient>

A surface layer portion of the polyurethane foam prepared according to the above <Preparation example of polyurethane foam> was cut to prepare a core portion with a thickness of 20 mm. Subsequently, normal incidence sound absorption coefficient for this core portion was measured according to JIS A 1405-2: 2007, and the average value of the normal incidence sound absorption coefficient at 100 to 5000 Hz was obtained. The incident direction of the sound to be measured was from the upper side in the foaming direction. The evaluation criteria were "○" for not less than 0.4 and "×" for less than 0.4. The results are shown in Table 1.

<Liquid dripping length>

An acrylic plate was placed vertically at a position 10 cm away from a discharge position of a high-pressure foaming machine, and the raw material composition prepared according to the above <Preparation example of raw material composition> was discharged from the high-pressure foaming machine to the acrylic plate at a speed of 120 g/sec for 0.2 seconds to form a discharged product on the acrylic plate. Five minutes after the discharge, a length from the highest point to the lowest point in the vertical direction of the discharged product on the acrylic plate is measured as the liquid dripping length.

[Table 1]

| | | | Example 1 | Example 2 | Comparative Example 1 | Comparative Example 2 |
|---|---|---|---|---|---|---|
| Polyol component | Polyol a1 | Parts by mass | 100 | | 50 | 100 |
| | Polyol a2 | | | 100 | 50 | |
| | Crosslinking agent b1 | | 16.7 | 10.0 | | |
| | Crosslinking agent b2 | | 5.56 | | | |
| | Crosslinking agent b3 | | 0.56 | | | 0.56 |
| | Crosslinking agent b4 | | 1.67 | 2.50 | | 1.67 |
| | Catalyst c1 | | 0.07 | | | 0.07 |
| | Catalyst c2 | | 1.33 | 0.63 | 0.20 | 1.33 |
| | Catalyst c3 | | | | 0.20 | |
| | Catalyst c4 | | | 1.25 | 1.00 | |
| | Catalyst c5 | | | 0.50 | | |
| | Foam stabilizer d1 | | | | 0.50 | |
| | Foam stabilizer d2 | | | 1.25 | | |
| | Blowing agent e1 | | | | 4.10 | |
| | Total (Parts by mass) | | 125.84 | 116.13 | 106.00 | 103.62 |
| Physical blowing agent | Blowing agent e2 | Parts by mass | 19.5 | | | 19.5 |
| | Blowing agent e3 | | | 12.5 | | |
| Polyisocyanate component | Polyisocyanate f1 | Parts by mass | 117.2 | | 69.9 | 22.6 |
| | Polyisocyanate f2 | | | 63.2 | | |
| Isocyanate index | | | 95 | 105 | 80 | 95 |
| Raw material temperature | | | 20°C | 20°C | 23°C | 20°C |
| Foam evaluation | | | ○ | ○ | ○ | × |
| Density | Apparent overall density[kg/m3] | | 70 | 100 | 50 | Unmeasurable |
| Peeling test | Peeling strength[N] | | 80.4 | 118 | 36.7 | Unmeasurable |
| | Evaluation | | ○ | ○ | × | |
| Sound absorption coefficient | Average value of normal incidence sound absorption coefficient at 100 to 5000 Hz | | 0.65 | 0.51 | 0.43 | Unmeasurable |
| | Evaluation | | ○ | ○ | ○ | |
| Liquid dripping length | Liquid dripping length[mm] | | >750 | >750 | >750 | Unmeasurable |

Example 1 and Example 2 are the flexible or semirigid polyurethane foams obtained from a composition using a physical blowing agent as a blowing agent, and the adhesive strength to the adherend is high as compared to that of the flexible polyurethane foam of Comparative Example 1 obtained from a composition using water as a blowing agent. In Comparative Example 2, the amount of the crosslinking agent was not sufficient, and the polyurethane foam could not be produced.

**EP 4 032 924 A1**

**Claims**

1. A flexible or semirigid polyurethane foam for direct adhesion to an adherend,
wherein the polyurethane foam is obtained from a composition comprising a polyisocyanate, a polyol and a physical blowing agent, and wherein the composition comprises a crosslinking agent having a functional group number of not less than 2 and a molecular weight of 60 to 1000 g/mol in an amount of not less than 3 parts by mass based on 100 parts by mass of the polyol.

2. The polyurethane foam according to claim 1, wherein the physical blowing agent is at least one selected from the group consisting of hydrochlorofluorocarbons, hydrofluorocarbons, hydrofluoroolefins, heptane, hexane, pentane, and cyclopentane.

3. The polyurethane foam according to claims 1 or 2, wherein the adherend is a pneumatic tire.

4. A method for producing a polyurethane foam, wherein the method comprises a step of directly applying a composition comprising a polyisocyanate, a polyol and a physical blowing agent to an adherend to form a polyurethane foam.

**13**

Europäisches
Patentamt

European
Patent Office

Office européen
des brevets

# EUROPEAN SEARCH REPORT

**Application Number**

EP 21 15 3253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/154718 A1 (DOESBURG VAN I [US]) 12 August 2004 (2004-08-12) * pages 2-3, paragraphs 21,34 - page 4; claims 1-3, 7, 9, 11; figure 1; examples A-C; table 8 * | 1,3,4 | INV. C08G18/10 C08G18/20 C08G18/24 C08G18/32 C08G18/48 C08G18/66 C08G18/76 C08J9/14 C08K5/54 |
| X | US 2015/151592 A1 (PARFONDRY ALAIN [FR] ET AL) 4 June 2015 (2015-06-04) * pages 2-4, paragraphs 25-38,40-45,53,68-88,70-71,75 - page 5, paragraphs 81-82, 93-94; figure 1 * | 1,3,4 | |
| A | KR 101 901 399 B1 (NEXEN TIRE CORP [KR]; BASF COMPANY LTD [KR]) 28 September 2018 (2018-09-28) * pages 6-9;, paragraphs 28-39; 52, 56, 58; figures 1-4 * | 1-4 | |

**TECHNICAL FIELDS SEARCHED (IPC)**

C08G
C08J
C08K

The present search report has been drawn up for all claims

| Place of search | Date of completion of the search | Examiner |
|---|---|---|
| Munich | 23 June 2021 | Stefaniu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 15 3253

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2021

| Patent document cited in search report | | | Publication date | Patent family member(s) | | | Publication date |
|---|---|---|---|---|---|---|---|
| US 2004154718 | A1 | | 12-08-2004 | NONE | | | |
| US 2015151592 | A1 | | 04-06-2015 | CN | 104364286 | A | 18-02-2015 |
| | | | | EP | 2859029 | A1 | 15-04-2015 |
| | | | | FR | 2991686 | A1 | 13-12-2013 |
| | | | | JP | 6123131 | B2 | 10-05-2017 |
| | | | | JP | 2015526535 | A | 10-09-2015 |
| | | | | KR | 20150029629 | A | 18-03-2015 |
| | | | | US | 2015151592 | A1 | 04-06-2015 |
| | | | | WO | 2013182477 | A1 | 12-12-2013 |
| KR 101901399 | B1 | | 28-09-2018 | NONE | | | |

EPO FORM P0459

For more details about this annex : see Official Journal of the European Patent Office, No. 12/82

**EP 4 032 924 A1**